# EUROPEAN PATENT SPECIFICATION

(11) **EP 2 242 637 B1**
(45) Date of publication and mention of the grant of the patent: **10.08.2011**
(21) Application number: 09709744.8
(22) Date of filing: 10.02.2009
(51) Int. Cl.: B29C 55/20, B29D 24/00, B31D 3/02, B65H 20/16

(54) **PROCESS FOR MANUFACTURING A PLASTIC-BASED PERFORATED THREE-DIMENSIONAL STRUCTURE AND DEVICE FOR IMPLEMENTING THIS PROCESS**
VERFAHREN ZUR HERSTELLUNG EINER DREIDIMENSIONALEN PERFORIERTEN STRUKTUR AUF KUNSTSTOFFBASIS UND VORRICHTUNG ZUM REALISIEREN DIESES VERFAHRENS
PROCÉDÉ DE FABRICATION D'UNE STRUCTURE TRIDIMENSIONNELLE PERFORÉE À BASE DE PLASTIQUE ET DISPOSITIF POUR RÉALISER CE PROCÉDÉ

(30) Priority: 12.02.2008 FR 0850866
(43) Date of publication of application: 27.10.2010
(73) Proprietor: SOLVAY (Société Anonyme), 1050 Bruxelles (BE)
(72) Inventor: DEHENNAU, Claude, B-1410 Waterloo (BE); GRANDJEAN, Dominique, B-1020 Brussels (BE)
(74) Representative: Jacques, Philippe
(86) International application number: PCT/EP2009/051474
(87) International publication number: WO 2009/101063

(56) References cited:
- WO-A-2007/110370
- FR-A- 2 697 765
- FR-A- 2 889 819
- US-A- 2 079 584
- US-A- 3 483 070
- US-A- 3 514 352

## Description

The present invention relates to a process for manufacturing a plastic-based perforated three-dimensional structure. It also relates to a device for implementing this process.

One requirement encountered in many industries (automotive, structural engineering, shipbuilding, etc.) consists in optimizing the mechanical properties/weight ratio of the structures used. Many processes have been developed for achieving this objective, and in particular for lightening plastic structures. Most of these processes use either the mechanical formation of macroscopic cells (by assembly of solid or molten streams in order to form cellular structures referred to as "honeycomb" structures) or the physical formation of microscopic cells by the release or expansion of gas (expansion or foaming using physical or chemical blowing agents). A combination of the two types of processes has also been envisaged.

Processes for manufacturing cellular structures by continuous extrusion of plastic-based compositions have been proposed in document EP-B-1 009 625 (document (1)) and in the French Patent Application published on 23 February 2007 under the number 2889189 (document (2)), the contents of which are incorporated by reference in the present description. The flexural modulus of all the cellular structures obtained according to the processes described in documents (1) and (2) is substantially higher in the transverse direction (perpendicular to the extrusion direction) than in the longitudinal direction ("machine" direction, parallel to the extrusion direction), limiting their benefit for certain applications.

The process described in the Patent Application published on 4 October 2007 under the number WO 2007/110370 (document (3)), the content of which is incorporated by reference in the present description, aims to overcome this drawback by making it possible, in particular, to obtain plastic-based anisometric cellular structures whose properties are more isotropic, which are less dense than previously known cellular structures. This process mainly comprises:
- a step (a) during which parallel lamellae of a composition based on at least one amorphous or semi-crystalline thermoplastic polymer are continuously extruded through a die containing a plurality of parallel slots;
- a step (b) during which, on exiting the die and in successive alternations, the spaces between two adjacent lamellae are subjected to an injection of a fluid and to a vacuum, the two sides of one and the same lamella being, for one side, subjected to the action of the fluid and, for the other side, to the action of the vacuum, and inversely during the following alternation, in order to produce deformation of the lamellae and to weld them in pairs with formation, in a plane approximately parallel to the extrusion direction, of a cellular structure whose constituent cells extend perpendicular to the extrusion direction;
- a step (c) during which the cellular structure obtained in step (b) is drawn perpendicular to the extrusion direction.

The implementation of this process may also comprise, after carrying out step (b), a thermal conditioning step (b2) during which the cellular structure obtained is brought to a temperature (T₁) such that T_{g} ≤ T₁ ≤ T_{g} + 40°C, T_{g} being the glass transition temperature of the thermoplastic polymer, if the latter is amorphous, or to a temperature (T₂) such that Tₘ ≥ T₂ Tₘ - 50°C, Tₘ being the melting point of the thermoplastic polymer, if it is semi-crystalline.

The drawing operation carried out in step (c) of this process is usually carried out on conventional drawing lines that are composed of a system of chains on which jaws are placed that clamp, for example by means of springs, the cellular structure via its two side ends and that move apart as it advances, as soon as said structure has reached the temperature set in step (b2). The operation of these jaws is not however well suited to the drawing of thick cellular structures. Indeed, although the forces for holding the cellular structure are weak, the clamping force exerted by this type of jaws crushes the edges of the cellular structure during step (b2) and deforms it, especially by creating a slight bulge on the side of the jaws that is on the outside with respect to said structure. This conventional operation of the jaws is even less suited to the forming of thick cellular structures since the closing force is proportional to the thickness of the structure.

The present invention aims to solve these problems and makes it possible to obtain perforated three-dimensional structures, especially anisometric cellular structures, which are thicker than those of the prior art, without deformation of their side ends.

The present invention therefore mainly relates to a process for manufacturing a plastic-based perforated three-dimensional structure comprising:
- a step (1) during which a flat structure of a composition based on at least one thermoplastic polymer (P) chosen from amorphous and semi-crystalline polymers is continuously extruded;
- a step (2) during which the flat structure resulting from step (1) is fabricated in the form of a perforated three-dimensional structure;
- a step (3) during which the perforated three-dimensional structure is grasped using gripping means comprising two pairs of jaws that are applied to the two side ends of the structure on both sides of the latter, each pair having its jaws at a given distance from one another in order to apply a controlled compression ratio to the structure;
- a step (4) during which the perforated three-dimensional structure is drawn by moving the two pairs of jaws relative to one another in a direction perpendicular to the extrusion direction and by keeping the distance between the jaws of one and the same pair constant.

In the present description, the term "amorphous polymer" is understood to mean any thermoplastic polymer (P) predominantly having a disordered arrangement of the macromolecules that form it. In other words, this term is understood to mean any thermoplastic polymer that contains less than 30% by weight, preferably less than 10% by weight, of crystalline phase (that is to say, the phase characterized by a melting endotherm during differential thermal analysis (DSC) measurements).

In the present description, the term "semi-crystalline polymer" is understood to mean any thermoplastic polymer (P) having, in a large proportion, a chemically and geometrically regular arrangement of the macromolecules that form it. In other words, this term is understood to mean any thermoplastic polymer that contains more than 30% by weight, preferably more than 50% by weight, of crystalline phase (that is to say, the phase characterized by a melting endotherm during differential thermal analysis (DSC) measurements).

Two characteristic temperatures are associated with thermoplastic polymers (P): they are the glass transition temperature (Tg) and the melting temperature (Tₘ). Tg is the temperature below which a polymer mass has several properties of inorganic glass, including hardness and rigidity. Above the Tg, the polymer mass has plastic or elastic properties and it is said to be in the rubbery or elastomeric state. Tₘ is also called the flow temperature in the case of amorphous polymers and the straightforward melting point when it is a question of semi-crystalline polymers. At the Tₘ (which is rather, in practice, a temperature zone or range), there is equilibrium between the solid elements and the molten elements of the polymer mass and consequently, in this temperature range, the latter mass is rather a viscous liquid.

Any thermoplastic polymer or copolymer whose Tₘ is below the decomposition temperature may be used in the process according to the present invention. Synthetic thermoplastics having a melting range spread over at least 10° C are particularly suitable. Examples of such materials include those that exhibit polydispersion in their molecular weight.

It is especially possible to use polyolefins, polyvinyl halides (PVC for example) or polyvinylidene halides (PVDF for example), thermoplastic polyesters, sulphonated aromatic polymers such as polysulphones, polyphenylsulphones, polybiphenyldisulphones, polyethersulphones, polyetherethersulphones, polybiphenylethersulphones and polyimidoethersulphones and blends of these polymers, polyketones, polyamides (PAs) and copolymers thereof. Polyolefins [and in particular polypropylene (PP) and polyethylene (PE)], polyphenylsulphones, PAs, PVCs and PVDFs have given good results.

The composition based on at least one thermoplastic polymer (P) (also known hereinafter more simply as "composition") used in the process according to the invention may be formed from a single polymer, from a blend of polymers or copolymers or from a blend of polymer material(s) with various additives (stabilizers; plasticizers; inorganic, organic and/or natural or polymer fillers, etc.). This composition may have undergone various treatments such as expansion, orientation, etc. A blowing agent may also be present, enabling expanded or foamed cellular structures to be produced. The blowing agent according to this variant of the present invention may be of any known type. It could be a "physical" blowing agent, that is to say a gas dissolved in the plastic under pressure and which causes the plastic to expand as it leaves the extruder. Examples of such gases are CO₂ nitrogen, steam, hydrofluorocarbons or HFCs (such as the 87/13 wt% CF₃-CH₂F/CHF₂-CH₃ mixture sold by Solvay under the name SOLKANE^{®} XG87), hydrocarbons (such as butane and pentane) or a mixture thereof. It may also be a "chemical" blowing agent, that is to say a substance (or a mixture of substances) dissolved or dispersed in the plastic and which, under the effect of the temperature, releases the gas or gases which will be used for the expansion of the plastic. Examples of such substances are azodicarbonamide and sodium bicarbonate/citric acid mixtures. The latter give good results.

The amount of blowing agent used in the process according to this variant of the invention must be optimized, especially according to its nature, to the properties (especially dynamic viscosity) of the polymer present and to the desired final density. In general, this content is not less than 0.1 %, preferably not less than 0.5%, and even not less than 1%.

It is understood that the polymers listed above may be added to by other polymers that are compatible or not with the latter and comprise, besides the optional plasticizers, the usual additives used for processing polymers, such as, for example, internal and external lubricants, heat stabilizers, light stabilizers, inorganic, organic and/or natural fillers, pigments, etc.

The implementation of the process according to the invention involves continuously extruding, during a step (1), a flat structure having the composition as defined above. This flat structure may be extruded, for example, through a die - referred to hereinafter as die (f) - such as the dies used for producing very wide, flat, plastic-based structures, described in the Patent Application published on 7 December 2006 under the number WO 2006/128837, the content of which is incorporated by reference in the present description.

In general, in these dies, the total length of the molten composition outflow slot, in the flow plane and in the direction perpendicular to the flow direction, is greater than one metre, and may even be greater than two, or even three, metres, thus making it possible to form a very wide flat structure easily.

As regards the width of the molten composition outflow slot (dimension in the flow plane, but in the direction parallel to the flow direction), it is generally of the order of a mm, or even of a cm. It is however generally less than 20 cm, usually less than 5 cm.

The implementation of the process according to the invention then involves a step (2) during which the flat structure resulting from step (1) is fabricated in the form of a perforated three-dimensional structure. The flat structure, exiting the slot of the aforementioned die (f), may itself be converted for final forming by any known appropriate rework system such as embossing rolls, polishing rolls, calendering rolls, etc. The die (f) may also be associated with and feed other forming means such as calibrated openings that make it possible to produce, for example, flat sheets having a thickness of 0.2 to 20 mm.

The die (f) described above, also referred to hereinafter as an "upstream die" may feed forming means, known more simply hereinafter as a "downstream die", with a molten flat structure, the upstream die and the downstream die then cooperating to constitute equipment for forming plastic-based, three-dimensional structures. In the most general configuration of this equipment, the very wide, flat structure made of molten plastic, delivered through the slot of the upstream die (f), feeds the downstream die for forming the material into a three-dimensional structure. In the present description, the expression "three-dimensional structure" is understood to mean any plastic structure with three dimensions, delivered by any die with an appropriate profile performing the function of a downstream die in the equipment according to the invention. This three-dimensional structure may also include hollow bodies joined together placed parallel to the plane of the flat structure from which it is derived.

In the present description, the expression "three-dimensional structure" is understood to mean a structure that conventionally has three characteristic dimensions ("thickness", "width" and "length") and of which one of the characteristic dimensions ("thickness") is smaller than the other two ("width" and "length"), and in particular considerably smaller than the third ("length").

In the present description, the expression "perforated three-dimensional structure" is moreover understood to mean a three-dimensional structure pierced right through by a plurality of orifices, perforations, channels or conduits, the axes of which are substantially perpendicular to the "width" and "length" dimensions of said structure.

According to one preferred embodiment variant, the perforated three-dimensional structure fabricated during step (2) of the process of the present invention is a cellular structure composed of a cohesive assembly of contiguous cellular cells (also referred to more simply as "cells" in the present description) having any cross section and walls that are essentially parallel from one cell to another.

The term "cells" is understood to mean open or closed cells having any cross section, generally a circular, oval, elliptical or hexagonal cross section, with walls that are essentially parallel from one cell to another.

The implementation of the process of the invention according to the preferred embodiment variant that aims to fabricate a cellular three-dimensional structure in the form of a cohesive assembly of cells involves continuously extruding, during step (2), parallel lamellae of the composition based on at least one thermoplastic polymer (P) through a downstream die containing a plurality of parallel slots. Examples of extrusion devices that may be suitable for this implementation are described in documents (1) and (2), the respective contents of which are incorporated for this purpose by reference in the present description.

The device described in document (1) comprises an extruder feeding the molten composition to a downstream coat-hanger die consisting of several parallel slots each intended for the continuous formation of a lamella, each slot being delimited by two parts in the shape of cones, produced from a thermally insulating material, cut into each of which is a groove.

The device described in document (2) essentially comprises:
(A) a downstream sheet die, which feeds the molten composition to knives, for forming the lamellae of molten composition that have to be welded;
(B) a plurality of knives, which make it possible to form the lamellae of molten composition that have to be welded; these knives are generally positioned in planes that are vertical, parallel and approximately equidistant apart;
between them they define flow channels having, in the flow direction of the molten composition, a convergent first part and, thereafter, a substantially straight part, the latter forming the side walls of each constituent slot of the die.

Whatever extrusion device is used for carrying out step (2) of the process of the invention, this step involves, according to its preferred embodiment variant, on exiting the downstream die and in successive alternations, subjecting the spaces between two adjacent lamellae to an injection of a fluid (F) and to a vacuum, the two sides of one and the same lamella being, for one side, subjected to the action of the fluid (F) and, for the other side, to the action of the vacuum, and inversely during the following alternation, in order to produce deformation of the lamellae and to weld them in pairs with formation, in a plane approximately parallel to the extrusion direction, of a cellular three-dimensional structure whose constituent cells extend perpendicular to the extrusion direction.

Practical embodiments of the preferred embodiment variant of step (2) are also described in documents (1) and (2).

The embodiment described in document (1) is preferred in the case where the fluid (F) is a coolant for the cellular structure in the process of being formed, and is, in particular, water. It means that each groove, cut into each cone-shaped part of each slot of the die, is connected, successively, to a vacuum source and to a coolant source. Forming of the cellular three-dimensional structure is carried out via two forming assemblies, consisting of conical parts that are complementary to the cone-shaped parts of the die and that are mounted vertically on the die, that is to say in the direction of the cells of the structure that has to be formed, in order to allow control of its thickness. The two forming assemblies define, by their facing surfaces, the support zones of the two faces of the cellular structure perpendicular to the cells. These surfaces converge from the exit of the die, towards a chamber for forming and cooling the cellular structure, this chamber being tubular with a rectangular cross section and having a height equal to the height of the structure to be obtained, in the direction of the cells of the latter, and having a width equal to that of the structure. A coolant tank from which the fluid is drawn off using a pump, a vacuum pump and a distributor, which is connected to these two pumps and also to a network connecting it to the various compartments located on both sides of the lamellae, and which is intended to successively connect each compartment with the vacuum source and with the coolant source, complete the device that enables the implementation of this embodiment.

The embodiment described in document (2) is preferred in the case where the fluid (F) is a gas, for example an inert gas, a mixture of inert gases or air. It requires the presence, in the device for extruding the composition, of two short sizing units generally being in the form of metal blocks placed on the front face of the die comprising the slots determined by the vertical knives, which front face may be coated with a sheet of insulating material. These sizing units are placed on either side of the die slots, one above them and the other below them. They can generally be moved vertically, in opposite directions, in order to define the height of the extruded lamellae and consequently the height of the final cellular three-dimensional structure.

Two chambers are cut out in each of these sizing units, starting from which chambers are tubular conduits that terminate in generally circular orifices emerging near the spaces between the die slots and therefore, during the implementation of the process according to the invention, near the spaces between the extruded lamellae.

Each chamber of each of these sizing units is alternately connected to a vacuum pump or to a compressed gas circuit. Thus, the spaces between two adjacent extruded lamellae are subjected, in successive alternations, to an injection of compressed gas and to a vacuum, the two sides of any one lamella being, for one side, subjected to the action of the compressed gas and, for the other side, to the action of the vacuum, and inversely during the following alternation, in order to produce deformation of the lamellae and weld them in pairs with formation, in a plane approximately parallel to the extrusion direction, of a cellular structure, the constituent cells of which extend perpendicular to the extrusion direction.

Each sizing unit is preferably set at a temperature below T_{struct}, but above T_{struct} minus 80°C, preferably above T_{struct} minus 50°C, even above T_{struct} minus 25°C, where T_{struct} is a structural temperature that corresponds to Tg if the composition comprises an amorphous polymer and to Tₘ if the composition comprises a semi-crystalline polymer.

According to this embodiment, the gas may be heated. The temperature of the gas is preferably greater than or equal to the processing temperature (Tₘₑ) of the plastic minus 100°C, preferably greater than or equal to Tₘₑ minus 50°C, even greater than or equal to Tₘₑ minus 20°C.

The practical embodiment for step (2) of the process according to the invention described in document (1) preferably applies to polyolefins and amorphous thermoplastic polymers (P) having a dynamic melt viscosity (measured conventionally via measurements of the shear stress and strain on a rheogoniometer) at their processing temperature (that is to say at the temperature at which they are extruded in order to be converted into cellular structures) and at an angular velocity of 0.1 rad/s of less than 2000 Pa.s, preferably of less than 1000 Pa.s. Preferably, these polymers have, in addition, a Tg, measured conventionally by DSC (according to the ISO 11357-2 standard), of less than 60°C, preferably of less than 50°C.

Non-limiting examples of amorphous polymers which may fit the definitions and limitations above are thermoplastic elastomers, and also blends thereof; thermoplastic polyesters and homopolymers and copolymers derived from vinyl chloride, and also blends thereof.

The practical embodiment for step (2) of the process according to the invention described in document (2) is preferably applied to thermoplastic polymers (P) having a melt viscosity (measured at the processing temperature and at 0.1 rad/s) greater than or equal to 2500 Pa.s, preferably greater than or equal to 3000 Pa.s. This practical embodiment also advantageously applies to compositions whose semi-crystalline or amorphous constituent polymer(s) (P) has or have a glass transition temperature (T_{g}) which may reach and even surpass 80°C, preferably between about 40 and about 60°C. This practical embodiment also gives good results with plastic compositions comprising a blowing agent, such as those mentioned above, which enable expanded or foamed cellular structures to be produced.

The operating conditions for step (2) of the process according to the present invention in its preferred embodiment are adapted in particular to the nature of the plastic-based composition. It should especially be ensured that the temperature of this composition at the downstream die exit is adapted so as to be able to weld the cells, to expand the composition where appropriate, etc., in the absence of deformation due to gravity. It should also be ensured that the alternating pressure and vacuum values, and also the duration of the cycles, are adapted so as to optimize this welding. In practice, a pressure greater than or equal to 0.5 bar relative, or even greater than or equal to 1.5 bar, is preferably used. This pressure is generally less than or equal to 6 bar, or less than or equal to 4 bar or even less than or equal to 2 bar. As regards the vacuum, this is generally greater than or equal to 100 mmHg absolute, or even greater than or equal to 400 mmHg. Finally, the duration of the cycles (pressure/vacuum alternations) is generally greater than or equal to 0.3 s, greater than or equal to 0.4 s, and preferably greater than or equal to 0.5 s. This duration is preferably less than or equal to 3 s, or less than or equal to 2 s and even less than or equal to I s.

The implementation of the process according to the present invention may comprise, after implementing step (2) and before and/or during the implementation of step (4), a step (3') during which the perforated three-dimensional structure obtained in step (2) is brought:
- to a temperature (T₁) such that T_{g} ≤ T₁ ≤ T_{g} + 40°C, preferably such that (T_{g} + 10°C) ≤ T₁ ≤ (T_{g} + 35°C), T_{g} being the glass transition temperature of the thermoplastic polymer (P) if it is amorphous; or
- to a temperature (T₂) such that Tₘ ≥ T₂ ≥ Tₘ - 50°C, preferably such that (Tₘ - 10°C) ≥ T₂ ≥ (Tₘ - 40°C), Tₘ being the melting point of the thermoplastic polymer (P) (measured according to the ASTM D 3417 standard) if it is semi-crystalline.

Conventional heating conditions, such as for example the conditions described in document (3) for the description of the step referred to therein as (b2), are not generally favourable to a rapid heat exchange and are therefore not particularly suitable for manufacturing thick cellular three-dimensional structures, such as those that it is possible to obtain by virtue of the process of the present invention.

The Applicant has therefore attempted to improve the heating conditions that generally exist during the implementation of step (3') of the process according to this variant of the present invention. For this purpose, the heating of the perforated three-dimensional structure may, for example, be carried out in an oven by direct application of a stream of hot air over said structure, which is kept in motion after it has been extruded and shaped. The air may be heated by passing over resistors and circulated via a device such as a fan. It may be blown under said structure, for example by means of nozzles. These nozzles may be flat and preferably have a rectangular cross section with a width equal to that of said structure and of which the profiling of the thicknesses from the edge towards the centre is controlled so that the hot-air flow rate is the same at any point. Indeed, the objective is to locally heat the honeycomb in order to counter thermal asymmetries in the oven (for example: the negative effect of the jaws).

If the temperature at the side ends of the three-dimensional structure requires expending more (or less) heat due to the proximity of the gripping means (described later on), the air flow rates at the two ends of the flat nozzle may be increased (or decreased) relative to the average air flow rate delivered by the nozzles, via a suitable geometry of the flow areas. Each flat nozzle may thus be profiled differently depending on the transverse temperature profile desired at each point of the oven.

The number of flat nozzles will depend on the thickness and possibly on the width of the perforated three-dimensional structure to be heated.

The air may be evacuated by a conduit located in the upper part of the oven, and may be recycled.

The advantages of a device such as that described above (with direct blowing of a stream of hot air over the structure) compared to heating via infrared (IR) radiation or via a conventional oven heated by ventilation are:
- heating of the entire thickness of the perforated three-dimensional structure via convection;
- rapid heat transfer compatible with the production rates of the three-dimensional structure;
- adjustable uniform heating over the entire width of the structure that ensures even drawing during the subsequent step (4) of the process according to the invention, described below.

Alternatively or additionally to this hot air blowing device, the process according to the invention may use electrical heating plates to heat the structure before and/or while it is being drawn.

In a preferred embodiment, the thermal conditioning means (oven) used are such that in any plane perpendicular to the axis of the oven, the temperature does not vary by more than 5°C, preferably 3°C and even more preferably, 1°C from the average temperature on said plane.

The process according to the invention comprises a step (4) during which the perforated three-dimensional structure, optionally thermally conditioned as explained above, is transversely drawn, that is to say drawn perpendicular to the extrusion direction. The scope of the invention also extends to the processes in which a cellular structure manufactured continuously according to the successive steps (1) and (2) is first stocked or stored in order to then subject it to steps (3) and (4). Finally, the scope of the invention also extends to the processes in which, during step (4), successively or simultaneously, a transverse drawing (perpendicular to the extrusion direction) and a longitudinal drawing (parallel to the extrusion direction) are carried out.

Whatever practical embodiment is used for step (4), the transverse draw ratio to which the perforated three-dimensional structure is subjected during step (4), expressed by the ratio of the final working width of the cellular structure after drawing to its initial width, is preferably at least 1.2/1, preferably at least 1.5/1, particularly at least 2/1, or even at least 2.5/1.

One essential feature of the process according to the invention lies in the choice of the means used for the transverse drawing of the perforated three-dimensional structure, more particularly in the choice and adjustment of the gripping means (pairs of jaws), applied to the two side ends of said structure, to provide this transverse drawing.

As in known drawing processes, the perforated three-dimensional structure is held laterally, by gripping means that comprise at least two pairs of jaws and preferably several pairs of jaws mounted on endless chains that, after step (3), move apart laterally from one another for the purpose of deforming said structure in the direction perpendicular to the processing direction (transverse direction). However, the originality of the process of the present invention lies in the use of gripping means that exert, on the two side ends of said three-dimensional structure, a limited but sufficient controlled pressure that thus makes it possible to squeeze (hold, grasp) the perforated three-dimensional structure without crushing it (i.e. without inducing bucling/making it collapse).

For this purpose, the jaws of one and the same pair (i.e. the parts of any geometry but that generally have one flat face intended to be in contact with the structure) that exert a pressure on both sides of a lateral edge of the structure in order to grasp it, are designed so that the distance separating them can be controlled i.e. adjusted to a predefined value (which will be explained below) that is maintained throughout the drawing operation.

In practice, the distance between the jaws of one and the same pair is such that it reduces the thickness of the side ends of the structure by less than a third of their thickness before drawing, preferably by less than a fifth of their thickness before drawing, and most particularly preferably by less than an eighth of their thickness before drawing. It is understood that generally all the pairs of jaws have the one and the same separation distance.

The perforated three-dimensional structure obtained may be cooled by ambient air, by blowing with a jet of cold air, by spraying with a water mist, etc. A jet of cold air gives good results.

After cooling, the thickness of the perforated three-dimensional structure may be levelled out (in the case of the preferred variant for manufacturing a cellular structure, this means that the height of the constituent cells may be made uniform) using any suitable devices, such as heated rolls that only flatten the overthicknesses of the structure. It is also possible to use dynamic presses (endless belts that rotate, are heated and entrain the honeycomb by calibrating it; such presses are, for example, used in the production of foamed panels made of PUR (polyurethane)) which may move forward along the axis of the drawing line. These devices may be placed in line with the production or be used discontinuously (batch process) to level out the thickness of the perforated three-dimensional structures.

The three-dimensional structure obtained may then be taken up by a take-off unit, the speed of which is adjusted according to the speed of exit from the post.

On leaving the take-off unit, the final perforated three-dimensional structure may easily be wound onto a reel. Alternatively, it may be subjected to a surface treatment (a corona treatment, for example), so as to improve the adhesion properties thereof in particular, and to be lined with a nonwoven or with top and bottom facings. After these optional operations, the final panel is cut, both lengthwise and transversely, into sheets of the desired dimensions and stored.

In the case of the preferred variant for manufacturing a cellular structure, the shape of the cells of the structure formed by the process of the invention is usually approximately polygonal, preferably approximately hexagonal, the sides of the polygon formed being non-isometric, that is to say that the lengths of these sides are unequal.

These generally hexagonal cells usually have a ratio of their length L (in the extrusion direction) to their width 1 (in the extrusion plane but along a direction perpendicular to that of the extrusion) of less than 2.5, preferably of less than 1.5, even equal to 1.

The length L of the cells is generally greater than or equal to 10 mm, even greater than or equal to 15 mm, but generally less than or equal to 30 mm.

As regards the wall thickness of the cells, this is conditioned by the thickness of the walls of the base cellular structure and by the draw ratios imposed during the transverse and optionally longitudinal drawing operations. In practice, it is generally greater than or equal to 100 µm, even greater than or equal to 200 or to 250 µm. Advantageously, it does not however exceed 1 mm, even 0.8 and preferably 0.6 mm, so as not to weigh down the structure. The lower limit in fact depends on the embodiment of the die enabling the base cellular structure to be produced and on the draw ratios used.

The practical transverse and optionally longitudinal drawing conditions exercised during step (4) are preferably chosen so that the ratio between the apparent flexural moduli measured on the final perforated three-dimensional structure (3-point bending test according to the ISO 1209-2 standard), parallel to the extrusion direction (longitudinal direction) and perpendicular to the extrusion direction (transverse direction) is less than 10, preferably less than 5, most particularly less than 2. A few routine tests are sufficient for a person skilled in the art to determine these practical drawing conditions as a function of the desired ratio between the apparent moduli.

The process of the present invention makes it possible to obtain cellular structures whose length can be varied to a very large extent, and this being with a wide range of plastic-based compositions that have suitable compositions.

The cellular structures obtained by the preferred variant of the process according to the invention are advantageously used in the building industry (floors, lightweight ceilings, partitions, doors, concrete boxes, etc.), in furniture, in packaging (side protection, wrapping of objects, etc.), in motor vehicles

(parcel shelf, door linings, etc.), etc. These structures are particularly suitable for furniture and for buildings, for example for the construction of permanent shelters (habitations) or temporary shelters (rigid tents or humanitarian shelters, for example). They are also suitable as constituents of sports hall floors.

They may be used therein as such, or as sandwich panels, in which they are placed between two sheets called facings. The latter variant is advantageous, and in this case it is possible to manufacture said sandwich panel by welding, bonding, etc., or any other method of assembling the facings and the core (used cold or hot, just after extrusion) that is suitable for plastics. One advantageous way of manufacturing said sandwich panel consists in welding the facings to the cellular core. Any welding process may be suitable for this purpose, processes using electromagnetic radiation giving good results in the case of structures/facings that are at least partially transparent to the electromagnetic radiation. Such a process is described in Application FR 03/08843, the content of which is for this purpose incorporated by reference in the present application.

The implementation of the process according to the invention involves a specific drawing device already described briefly above, comprising gripping means that make it possible to ensure a limited pressure on the side ends of the perforated three-dimensional structure without crushing it, and which constitutes another aspect of the invention.

As practical examples of such gripping means, mention may be made of pairs of upper and lower jaws, the relative distance of which can be adjusted (can be set to a chosen value) using at least one mechanical guide. Preferably, these gripping means comprise springs that are used to separate (and not to press) the upper jaws from (to) the lower jaws up to a distance set by adjustable mechanical guides, for example by manually or electrically controlled actuator systems. These guides may act on the upper jaws or on the lower jaws, but preferably act on the upper jaws alone i.e. only the upper jaws are mobile, the lower jaws being fixed. These guides ensure the movement of the jaws along a vertical axis. The adjustment of the distance between the upper jaws and the lower jaws is preferably made so that this distance is fixed in order to minimize the thickness of the three-dimensional structure to be drawn while enabling it to be grasped i.e. to prevent it from sliding out of the jaws, as will be described in more detail later on.

The constituent material of the jaws may be metallic or synthetic. In general, it is preferred to increase the gripping surface area by increasing the number of jaws per unit length of the drawing zone rather than increasing the surface area of the jaws themselves. Indeed, if the contact area is increased by increasing the length (perpendicular to the drawing direction), the amount of scrap to be recycled is increased. It is namely so that the material in between 2 janws (of a given pair of jaws) is not drawn, so that increasing the length of jaws would create large areas of undrawn material which is hence preferably removed and recycled; it is therefore preferred to increase the number of jaws per unit length of the zone. Usually, the distance between two neighbouring sets of jaws is less than three times the width of one jaw (dimension parallel to the drawing direction); preferably, this distance is less than one and a half times the width of one jaw, most particularly less than one times the width of one jaw.

In certain cases, it may be advantageous to condition the jaws at a temperature below the drawing temperature in order to favour the attachment. Indeed, while heating, the material softens and the compressive force will decrease. Therefore, in this variant, the temperature of the jaws will preferably be below the T_{g} or the Tₘ, preferably below T_{g}-10°C and Tₘ-10°C, or even below Tₘ-30°C (T_{g} and Tₘ having been defined above).

Without wishing to in any way limit the scope of the invention by relaying on a given theory, the Applicant has observed that in order for the side ends of the perforated three-dimensional structure that are to be drawn to be held firmly between the gripping means, without slipping but without being crushed, it is recommended that the tension (Fs) that it is necessary to exert in the longitudinal plane of said structure, in order to slide it out of the gripping means, be greater than the tension (Ft) developed by drawing said structure. In other words: it is preferable to ensure that the friction forces succeed in counteracting the slippage of the structure out of the gripping jaws that is induced by the pulling forces that are exerted on it, while limiting the crushing of said structure. For this purpose it is possible, in order to improve the gripping action, to ensure that the jaws have a surface intended to be in contact with the ends of the three-dimensional structure, which is rough, i.e. has a high friction coefficient. For this purpose it is possible to equip the jaws with pads, the surfaces of which, in contact with the ends of the three-dimensional structure, are rendered rough by bumps, ridges, grooves, protuberances etc. preferably made perpendicular to the drawing direction.

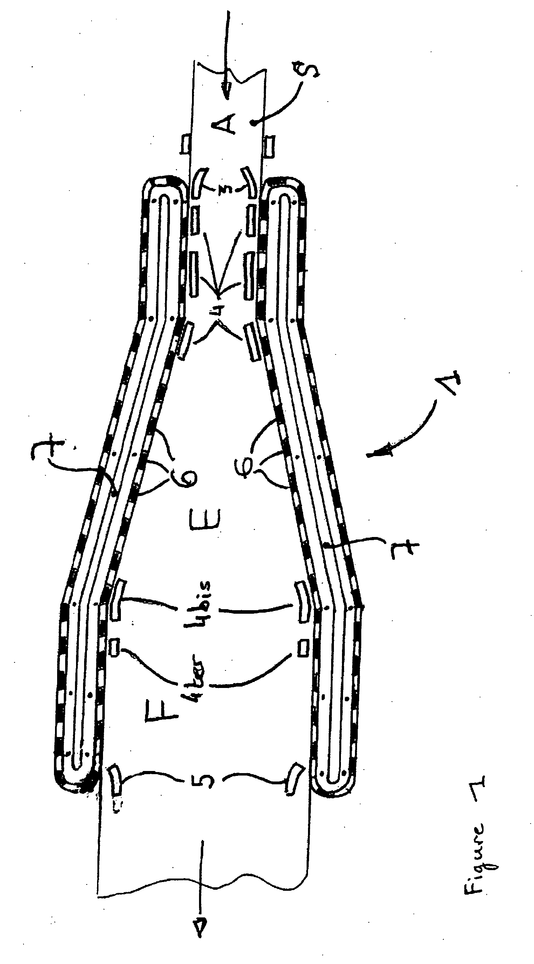

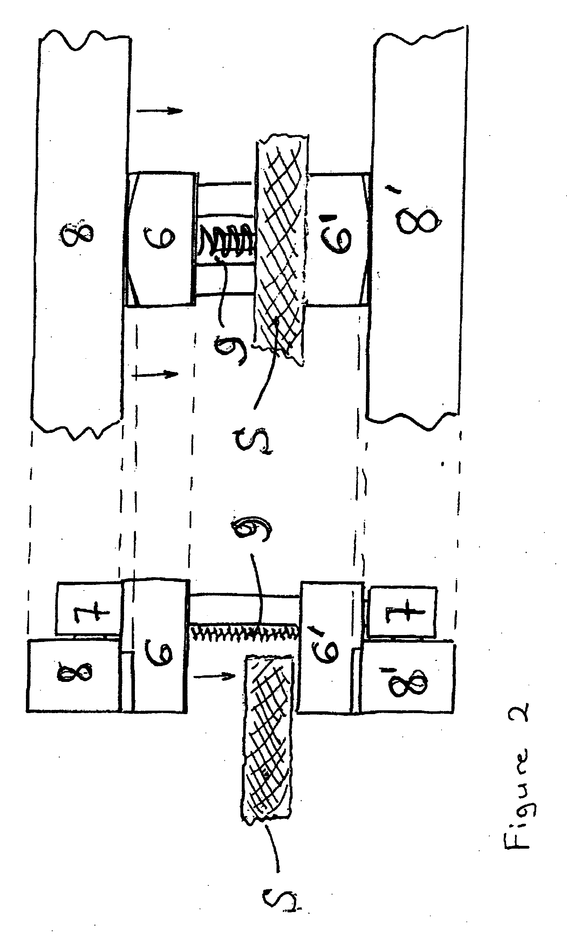

One particular embodiment of the process and of the drawing device according to the invention (that integrates several preferred variants of the invention) is illustrated below with reference to the drawings that accompany the present description. These drawings are constituted by the appended Figures 1 and 2, which schematically represent a typical embodiment of this device, used for carrying out the process for a cellular three-dimensional structure that constitutes the other subject of the invention, and more particularly for carrying out step (4) of this process.

Figure 1 represents a general view in a horizontal plane (not to scale) of the whole of a continuous drawing unit 1 suitable for the biaxial orientation of a plastic-based perforated three-dimensional structure (S) delivered at A via a suitable extrusion device (not represented). The structure (S) is pulled inside the unit 1 by clamps or jaws (6) and thermally conditioned at the temperature (T₁) or (T₂), as defined above, by passing over heating elements shown schematically as (3, 4 and 5). The structure (S) then progresses into the biaxial drawing section E where it undergoes transverse drawing (direction perpendicular to the extrusion direction) and longitudinal drawing (direction parallel to the extrusion direction), the transverse and longitudinal draw ratios to which the structure (S) is subjected being 2.5/1. If necessary for the successful implementation of the biaxial orientation, additional heating elements shown schematically as 4a can be positioned so as to adjust the temperature range for the biaxial orientation of the structure (S).

The biaxially oriented structure (S) then passes into section F where it can, if necessary, undergo an additional longitudinal drawing and a dimensional stabilization owing to the optional heating elements shown schematically as 4b.

The structure (S) then passes between heated rolls (not represented) that flatten the overthicknesses thereof and is conveyed to a take-off unit (also not represented, but the effect of which is shown schematically by an arrow), on exiting which it is cut and stacked.

The side ends of the structure (S) progressing through the continuous drawing unit 1 are held by pressure and without crushing by gripping means that are the jaws 6 which are positioned at the periphery of the endless chains 7 and of which the variable separation is provided, in the particular embodiment of the drawing device represented, via springs adjusted by mechanical guides.

Figure 2 represents in detail (not to scale) a practical embodiment of the gripping means schematically represented in Figure 1. This Figure respectively comprises an elevation and a cross-sectional view of the gripping means of one side end of the structure (S) in the biaxial drawing section E of the continuous drawing unit 1. These gripping means are the upper jaw 6 and lower jaw 6' respectively attached to an upper mechanical guide 8 and a lower mechanical guide 8' that are themselves attached to the endless chain 7 represented in Figure 1. These jaws have a width of around 25 mm and the surface areas in contact with the side ends of the structure (S) are covered with adhesive pads that are ridged perpendicular to the transverse drawing direction. Two neighbouring pairs of jaws are approximately 10 mm apart. During operation, the upper mechanical guide 8 reduces the separation between the upper jaw 6 and lower jaw 6' via pressure on the spring 9 (in the direction of the arrows) so as to reduce the thickness of the side end of the structure (S) by the desired value (see above). Therefore, during operation, when the jaws (6, 6') are positioned by means of the guides, the jaw 6 is also in contact with the structure S.

## Claims

1. Process for manufacturing a plastic-based perforated three-dimensional structure comprising:
- a step (1) during which a flat structure of a composition based on at least one thermoplastic polymer (P) chosen from amorphous and semi-crystalline polymers is continuously extruded;
- a step (2) during which the flat structure resulting from step (1) is fabricated in the form of a perforated three-dimensional structure;
- a step (3) during which the perforated three-dimensional structure is grasped using gripping means comprising two pairs of jaws that are applied to the two side ends of the structure on both sides of the latter, each pair having its jaws at a given distance from one another in order to apply a controlled compression ratio to the structure;
- a step (4) during which the perforated three-dimensional structure is drawn by moving the two pairs of jaws relative to one another in a direction perpendicular to the extrusion direction and by keeping the distance between the jaws of one and the same pair constant.

2. Process according to the preceding claim, comprising, after implementing step (2) and before and/or during the implementation of step (4), a step (3') during which the perforated three-dimensional structure obtained in step (2) is brought:
- to a temperature (T1) such that Tg ≤ T1 ≤ Tg + 40°C, preferably such that
(Tg + 10°C) ≤ T1≤ (Tg + 35°C), Tg being the glass transition temperature of the thermoplastic polymer (P) if it is amorphous; or
- to a temperature (T2) such that Tm ≥ T2 ≥ Tm - 50°C, preferably such that (Tm - 10°C) ≥ T2 ≥ (Tm - 40°C), Tm being the melting point of the thermoplastic polymer (P) (measured according to the ASTM D 3417 standard) if it is semi-crystalline.

3. Process according to the preceding claim, **characterized in that** the heating of the perforated three-dimensional structure is carried out in an oven by direct application of a stream of air heated by passing over resistors, circulated via a device such as a fan and blown under said structure by means of nozzles.

4. Process according to any one of the preceding claims, **characterized in that** step (4) is carried out in such a way that the ratio of the final working width of the cellular structure after drawing to its initial width (before drawing) is preferably at least 1.2/1, preferably at least 1.5/1, particularly at least 2/1, or even at least 2.5/1.

5. Process according to any one of the preceding claims, **characterized in that** the distance between the jaws of one and the same pair is adjusted so that it reduces the thickness of the side ends of the structure by less than a third of their thickness before drawing.

6. Process according to any one of the preceding claims, **characterized in that**, after the drawing step (4), the thickness of the perforated three-dimensional structure is levelled out using heated rolls or dynamic presses, the upper and lower walls of which are heated.

7. Drawing device for carrying out step (4) of the process according to any one of the preceding claims, comprising pairs of upper and lower jaws, the relative distance of which is fixed by adjustable mechanical guides.

8. Drawing device according to the preceding claim, **characterized in that** only the upper jaws are mobile, the lower jaws being fixed.

9. Drawing device according to Claim 7 or 8, in which the jaws have a surface intended to be in contact with the ends of the three-dimensional structure, which is rough, i.e. has a high friction coefficient.

## Patentansprüche

1. Verfahren zur Herstellung einer perforierten dreidimensionalen Struktur auf Kunststoffbasis, umfassend:
- einen Schritt (1), während welchem eine flache Struktur einer Zusammensetzung auf Basis von mindestens einem thermoplastischen Polymer (P), das aus amorphen und halbkristallinen Polymeren gewählt ist, kontinuierlich extrudiert wird;
- einen Schritt (2), während welchem die aus Schritt (1) resultierende flache Struktur in der Form einer perforierten dreidimensionalen Struktur hergestellt wird;
- einen Schritt (3), während welchem die perforierte dreidimensionale Struktur mit Hilfe von Greifeinrichtungen, umfassend zwei (Klemm-)Backenpaare, die auf die zwei Seitenenden der Struktur auf beide Seiten von letzterer angewandt werden, gegriffen wird, wobei bei jedem Paar die Backen einen bestimmten Abstand zueinander haben, damit ein kontrolliertes Druckverhältnis auf die Struktur angewandt wird;
- einen Schritt (4), während welchem die perforierte dreidimensionale Struktur durch Bewegen der zwei Backenpaare in Bezug zueinander in senkrechter Richtung zu der Extrusionsrichtung und durch Halten des Abstands zwischen den Backen mit ein und derselben Paarkonstante gestreckt wird.

2. Verfahren gemäß dem vorausgehenden Anspruch, umfassend nach dem Realisieren von Schritt (2) und vor und/oder während der Realisierung von Schritt (4) einen Schritt (3'), während welchem die in Schritt (2) erhaltene perforierte dreidimensionale Struktur:
- auf eine Temperatur (T1) gebracht wird, so dass Tg ≤ T1 ≤ Tg + 40°C ist, vorzugsweise so dass (Tg + 10°C) ≤ T1 ≤ (Tg + 35°C) ist, wobei Tg die Glasübergangstemperatur des thermoplastischen Polymers (P) ist, falls dieses amorph ist; oder
- auf eine Temperatur (T2) gebracht wird, so dass Tm ≥ T2 ≥ Tm - 50°C ist, vorzugsweise so dass (Tm - 10°C) ≥ T2 ≥ (Tm - 40°C) ist, wobei Tm der Schmelzpunkt des thermoplastischen Polymers (P) ist (gemessen gemäß dem ASTM D 3417-Standard), falls dieses halbkristallin ist.

3. Verfahren gemäß dem vorausgehenden Anspruch, **dadurch gekennzeichnet, dass** das Erwärmen der perforierten dreidimensionalen Struktur in einem Ofen durchgeführt wird durch direkte Anwendung eines Stroms von Luft, die durch Leiten über Widerstände erwärmt wird, der mittels einer Vorrichtung, wie einem Gebläse, zirkuliert wird und unter die Struktur mittels Düsen geblasen wird.

4. Verfahren gemäß einem der vorausgehenden Ansprüche, **dadurch gekennzeichnet, dass** der Schritt (4) in einer solchen Weise durchgeführt wird, dass das Verhältnis der Endverarbeitungsbreite der zellulären Struktur nach dem Ziehen auf ihre Anfangsbreite (vor dem Ziehen) vorzugsweise mindestens 1,2/1, vorzugsweise mindestens 1,5/1, insbesondere mindestens 2/1, oder sogar mindestens 2,5/1 beträgt.

5. Verfahren gemäß einem der vorausgehenden Ansprüche, **dadurch gekennzeichnet, dass** der Abstand zwischen den Backen von ein und demselben Paar so eingestellt wird, dass er die Dicke der Seitenenden der Struktur um weniger als ein Drittel ihrer Dicke vor dem Ziehen verringert.

6. Verfahren gemäß einem der vorausgehenden Ansprüche, **dadurch gekennzeichnet, dass** nach dem Ziehschritt (4), die Dicke der perforierten dreidimensionalen Struktur mit Hilfe von beheizten Walzen oder dynamischen Pressen eingeebnet wird, deren obere und untere Wände erwärmt werden.

7. Ziehvorrichtung zur Durchführung von Schritt (4) des Verfahrens gemäß einem der vorausgehenden Ansprüche, umfassend Paare von oberen und unteren Backen, deren relativer Abstand durch einstellbare mechanische Führungen fixiert wird.

8. Ziehvorrichtung gemäß dem vorausgehenden Anspruch, **dadurch gekennzeichnet, dass** nur die oberen Backen beweglich sind, wobei die unteren Backen fixiert sind.

9. Ziehvorrichtung gemäß Anspruch 7 oder 8, in welcher die Backen eine Oberfläche aufweisen, die mit den Enden der dreidimensionalen Struktur in Kontakt stehen sollen, die rauh ist, d. h. die einen hohen Reibungskoeffizienten aufweist.

## Revendications

1. Procédé pour la fabrication d'une structure tridimensionnelle perforée à base de matière plastique comprenant :
- une étape (1) au cours de laquelle on extrude en continu une structure plane d'une composition à base d'au moins un polymère thermoplastique (P) choisi parmi les polymères amorphes et semi-cristallins ;
- une étape (2) au cours de laquelle on façonne la structure plane issue de l'étape (1) sous la forme d'une structure tridimensionnelle perforée ;
- une étape (3) au cours de laquelle on agrippe la structure tridimensionnelle perforée à l'aide de moyens de préhension comprenant deux paires de mâchoires que l'on applique aux deux extrémités latérales de la structure de part et d'autre de celle-ci, chaque paire ayant ses mâchoires à une distance donnée l'une de l'autre pour appliquer un taux de compression contrôlé à la structure ;
- une étape (4) au cours de laquelle on étire la structure tridimensionnelle perforée en déplaçant les deux paires de mâchoires l'une par rapport à l'autre dans un sens perpendiculaire au sens de l'extrusion et en maintenant constante la distance entre les mâchoires d'une même paire.

2. Procédé selon la revendication précédente, comprenant après la réalisation de l'étape (2) et avant et/ou pendant la réalisation de l'étape (4), une étape (3') au cours de laquelle on amène la structure tridimensionnelle perforée obtenue à l'étape (2) :
- à une température (T1) telle que Tg ≤ T1 ≤ Tg + 40°C, de préférence telle que
(Tg + 10°C) ≤ T1 ≤ (Tg + 35°C), Tg étant la température de transition vitreuse du polymère thermoplastique (P) s'il est amorphe, ou
- à une température (T2) telle que Tm ≥ T2 ≥ Tm - 50°C, de préférence telle que (Tm - 10°C) ≥T2 ≥ (Tm - 40°C). Tm étant la température de fusion du polymère thermoplastique (P) (mesurée selon la norme ASTM D 3417) s'il est semi-cristallin.

3. Procédé selon la revendication précédente, **caractérisé en ce que** le réchauffement de la structure tridimensionnelle perforée s'effectue dans un four par l'application directe d'un flux d'air chauffé par passage sur des résistances, mis en circulation via un dispositif tel qu'un ventilateur et soufflé sous ladite structure au moyen de buses.

4. Procédé selon l'une quelconque des revendications précédentes, **caractérisé en ce que** l'étape (4) est conduite de manière à ce que le rapport entre la largeur utile finale de la structure alvéolaire après étirage et sa largeur initiale (avant étirage) est de préférence au moins 1,2 / 1, de préférence au moins 1,5 / 1, particulièrement au moins 2/1, voire au moins 2,5 / 1.

5. Procédé selon l'une quelconque des revendications précédentes, **caractérisé en ce que** la distance entre les mâchoires d'une même paire est réglée de manière telle qu'elle réduit l'épaisseur des extrémités latérales de la structure de moins du tiers de leur épaisseur avant étirage.

6. Procédé selon l'une quelconque des revendications précédentes, **caractérisé en ce que**, après l'étape d'étirage (4), l'épaisseur de la structure tridimensionnelle perforée est égalisée à l'aide de cylindres chauffés ou de presses dynamiques dont les parois supérieures et inférieures sont chauffées.

7. Dispositif d'étirage pour la réalisation de l'étape (4) du procédé selon l'une quelconque des revendications précédentes, comprenant des paires de mâchoires supérieures et inférieures dont la distance relative est fixée par des guides mécaniques réglables.

8. Dispositif d'étirage selon la revendication précédente, **caractérisé en ce que** seules les mâchoires supérieures sont mobiles, les mâchoires inférieures étant fixes.

9. Dispositif d'étirage selon la revendication 7 ou 8, dans lequel les mâchoires ont une surface destinée à être en contact avec les extrémités de la structure tridimensionnelle, qui est rugueuse c.à.d. présente un coefficient de frottement élevé.
